# EUROPÄISCHE PATENTSCHRIFT

(11) **EP 3 715 078 B1**
(45) Veröffentlichungstag und Bekanntmachung des Hinweises auf die Patenterteilung: **20.09.2023**
(21) Anmeldenummer: 20166437.2
(22) Anmeldetag: 27.03.2020
(51) Int. Cl.: B29B 7/74, B29B 7/42, B01F 27/50, B01F 33/501, B05C 17/005, B01F 101/00

(54) **MISCHERAUFSATZ FÜR EINE MEHRKOMPONENTENKARTUSCHEN-PISTOLE**
MIXER ATTACHMENT FOR A MULTI-COMPONENT-CARTRIDGE GUN
ACCESSOIRE MÉLANGEUR POUR PISTOLET À CARTOUCHE MULTICOMPOSANTS

(30) Priorität: 29.03.2019 DE 102019108287
(43) Veröffentlichungstag der Anmeldung: 30.09.2020
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Onsagers AS

(56) Entgegenhaltungen:
- EP-A1- 2 944 380
- WO-A1-2013/056874
- DE-A1- 2 821 369
- DE-A1-102016 003 538
- DE-A1-102016 214 069
- DE-U1- 9 417 665
- DE-U1-202019 101 803

## Beschreibung

Die vorliegende Erfindung betrifft ein Mischeraufsatz-System, das eingerichtet ist, sich an einer Mehrkomponentenkartuschen-Pistole (insbesondere einer Doppelkartuschen-Pistole oder einem sogenannten Austraggerät) befestigen zu lassen, wobei die Pistole eingerichtet ist, alle flüssigen Komponenten (die in den Behältern einer in die Pistole eingesetzten Mehrkomponentenkartusche enthalten sind) gleichzeitig in einem bestimmten Volumenstromverhältnis aus den Auslassöffnungen der Behälter der Kartusche hinaus zu fördern - und wobei der Mischeraufsatz dazu eingerichtet ist, dann diese flüssigen Komponenten mit einander zu vermischen.

Zum Herstellen von Kunststoff aus mindestens zwei Komponenten zum Beispiel beim Aufbringen eines Zweikomponentenklebstoffs auf die zu fügenden Bauteile oder beim Aufbringen von Kunststoff auf eine Klebenaht eines Rotorblatts einer Windkraftanlage oder als Spachtelmasse werden bei einigen Kunststoffen mindestens zwei fluide Komponenten so mit einander vermischt, dass sich das entstandene insbesondere flüssige oder pastöse Gemisch vernetzt und (gegebenenfalls in der Gussform) "aushärtet".

Dieses Mischen von Kunststoff aus zumeist zwei Komponenten in kleineren Mengen zum Beispiel zur Reparatur oder zum Ausbessern von Oberflächenfehlern erfolgt mittels bekannter Mischvorrichtungen, die von einer Person nur mit Körperkraft tragbar und handhabbar zum Mischen von mindestens zwei flüssigen Komponenten zu einem aushärtenden Kunststoff eingerichtet sind, nämlich sogenannter Mehrkomponentenkartuschen-Pistolen (insbesondere Doppelkartuschen-Pistolen oder "Austraggeräten" - nur zum Beispiel unter dem Namen Mixpac der Firma Sulzer). Eine solche Pistole ist an Mehrkomponentenkartuschen mindestens einer bestimmten Geometrie angepasst und eingerichtet, alle flüssigen Komponenten (die in den Behältern einer solchen in die Pistole eingesetzten Mehrkomponentenkartusche enthalten sind) gleichzeitig in einem bestimmten Volumenstromverhältnis aus den Auslassöffnungen der Behälter der Kartusche hinaus zu fördern - hinein in einen aufsetzbaren statischen Mischer. Ein statischer Mischer ist ein kurzer Leitungsabschnitt, der dazu eingerichtet ist, diese flüssigen Komponenten dann beim Durchfließen durch seine internen Verwirbelungskonturen und/oder -labyrinthe mit einander zu vermischen. Auslassöffnungen der Behälter von Mehrkomponentenkartuschen liegen üblicherweise dicht bei einander und/oder sind zum Beispiel in einer Auslasseinrichtung zusammengefasst, um einen statischen Mischer einfach daran befestigen zu können.

Dagegen bei der Herstellung von großen Mengen von Kunststoff stehen aufwendigere Misch- und Dosieranlagen zur Verfügung: Auch hier erfolgt die Applikation des gemischten noch flüssigen Kunststoffs (zum Beispiel auf ein Fasergelege oder - gewebe zum Herstellen von GFK oder CFK oder zum Beispiel auch das Einleiten in eine Gussform) durch eine rohrförmige Durchleitung (Mischer) mit Formelementen (Verwirbelungselementen) in ihrem Innenraum, die hindurchströmendes Fluid verschiedentlich um-, ablenken, lokal stauen, Turbulenzen erzeugen und/oder verwirbeln und somit durchmischen. In diesen Mischer hinein führen bekanntlich Zuleitungen insbesondere in der Anzahl der fluiden Komponenten, aus denen der Kunststoff zusammenzumischen ist.

Die Verwirbelungselemente sind üblicherweise als sogenannter "Mischereinsatz" in die oft kreiszylindrische Durchleitung (rohrförmige Mischkammer) einsetzbar - und zwar entweder drehfest, so dass sich insgesamt ein sogenannter (oben bereits erwähnter auch bei den tragbaren Pistolen verwendbarer) "statischer" Mischer als üblicherweise auswechselbarer Einsatz ergibt - oder drehangetrieben bei einem sogenannten "dynamischen" Mischer.

Ein Mischereinsatz eines dynamischen Mischers weist üblicherweise ein Trägerstabelement mit mindestens einem Verwirbelungselement auf. Vorzugsweise ist das Trägerstabelement länglich und/oder gerade, insbesondere zylindrisch. Und vorzugsweise sind mehrere Verwirbelungselemente um das vorzugsweise längliche Trägerstabelement herum angeordnet zum Beispiel wie Propellerflügel um eine Propellerachse. Der Mischereinsatz ist betreffend den Durchmesser seiner Außenkontur (also insbesondere den freien Enden der Propellerflügelartigen Verwirbelungselemente) zum Einsatz in die rohrförmige Durchleitung angepasst.

Der Mischereinsatz ist zum Beispiel so angepasst, dass er mindestens einen (von den Komponenten durchflossenen) Querschnitt der Durchleitung mit seinen Verwirbelungselementen durchkreuzt oder er mit seinen Verwirbelungselementen in mindestens einen solchen Querschnitt der Durchleitung hineinragt. Die dort hindurch strömenden Fluide werden dann strömungsmechanisch zum Beispiel um- und/oder ablenkt, lokal gestaut, Turbulenzen werden in ihnen erzeugt und/oder sie werden verwirbelt - und somit durchmischt. Das Trägerstabelement dient dabei im Wesentlichen dazu, die Verwirbelungselemente zu dem einen Bauteil des Mischereinsatzes zu vereinen, es muss also nicht unbedingt "Stab"-förmig sein, geschweige denn zylindrisch. In Bereichen, wo die Verwirbelungselemente direkt aneinandergrenzen, muss ein Trägerstabelement nicht einmal überhaupt erkennbar sein, weil die Verwirbelungselemente selbst direkt in einander übergehen können. So ist der Begriff "Trägerstabelement" im allerweitesten Sinne zu verstehen als irgendein Verbindungselement (oder irgendwelche Verbindungselemente) auch zur Drehbewegungsübertragung zwischen den Verwirbelungselementen.

Wie gesagt kann ein Mischer mit einem derartigen Mischereinsatz als dynamischer Mischer eben für "dynamisches" Mischen gebaut oder eingerichtet sein - also mit einem Drehantrieb für den Mischereinsatz und mit einer genügend "weiten" Durchleitung (rohrförmigen Mischkammer), in der der Mischereinsatz sich drehen kann. Mischereinsatz und/oder Durchleitung können so konstruiert und kalkuliert sein, dass sie sich zum Beispiel nach einmaligem Gebrauch entsorgen und ersetzen lassen (diese nennen sich im Handel dann "dynamische Einweg-Kunststoffmischer") .

Derartige dynamische Mischer kommen auch in der Erfindung zum Einsatz.

Mit einer solchen Produktions-Misch- und Dosieranlage jedenfalls wird in der Produktion insbesondere von großen Kunststoffteilen das Vermischen großer Mengen von Komponenten so spät wie möglich zum Beispiel vor dem Einleiten in die Gussform oder dem Aufbringen auf das Gelege oder Gewebe etwa in der Form eines Rotorblatts für eine Windkraftanlage gewährleistet.

Dies ermöglicht die Verwendung auch von Kunststoff mit kurzer "Topfzeit", Kunststoff also, der schon kurze Zeit nach dem Vermischen vernetzt und dadurch schnell an Fließfähigkeit (Viskosität) verliert, die er zum Beispiel braucht, um die Gussform vollständig auszufüllen oder das Gelege oder Gewebe vollständig zu durchtränken.

Die bekannten Produktions-Misch- und Dosiervorrichtungen sind Standgeräte, die bei der Herstellung der Kunststoffteile (zum Beispiel mittels der genannten formgebenden Verfahren) am Herstellungsort, etwa einer Werkshalle, grundsätzlich völlig zufriedenstellend einsetzbar sind.

In den Standgeräten für die Produktion sind die erforderlichen Aggregate und Elemente gut unterzubringen wie insbesondere auch die voluminösen Vorratsbehälter der Kunststoffkomponenten, die Förderantriebe zum Bewerkstelligen des Transports der Kunststoffkomponenten aus den Vorratsbehältern in den "Mischkopf" (Durchleitung und Mischereinsatz) sowie bei dynamischen Mischern der Drehantrieb. Um den gemischten, noch flüssigen Kunststoff gut und leicht handhabbar an den jeweils erforderlichen Ort zu bringen, ist ein Mischkopf mit einem Auslass für den gemischten Kunststoff an einem Ende eines Bündels flexibler Leitungen angeordnet, nämlich zumindest der Komponentenzuleitungen sowie - beim dynamischen Mischer - zum Beispiel einer flexiblen Welle, die die Drehantriebsleistung von einem Motor am Standgerät auf den in der Durchleitung drehbaren Mischer überträgt. Der Mischkopf und/oder das Leitungsbündel hängt oft an einem Teleskopseil oder ist an einem Auslegerarm (Mischkopfgalgen) befestigt, um das erhebliche Gewicht aufzufangen und so dann trotzdem recht gut handhabbar zu sein. Die übrigen Aggregate und Elemente der Misch- und Dosieranlage für die Produktion sind ortsfest.

Derart hergestellte Kunststoffteile benötigen aber oftmals nachträglichen Materialauftrag in kleinen Mengen: zum Beispiel auf verschlissenen Oberflächen oder wegen welcher Beschädigung auch immer. Oftmals kann dies nicht mehr mit der Produktionsanlage erfolgen, oder es wäre unwirtschaftlich. Denn die Produktionsanlage in Betrieb zu nehmen, ist aufwendig - und sie ohne Ausstoß von gemischtem Kunststoff in Betriebsbereitschaft zu halten ist zum Beispiel wegen des üblicherweise auch in der Anlage, wenn sie nicht fördert, schnell härtenden Kunststoffs grundsätzlich kaum oder nur für sehr kurze Zeit möglich.

Deshalb gibt es die einleitend schon erwähnten tragbaren Kartuschen-Mischvorrichtungen oder "Mischpistolen", in die kleine Behältereinheiten (Kartuschen) bestimmter Geometrie (an die die tragbare Vorrichtung angepasst ist) einsetzbar sind, und zwar in den verschiedenen Kammern der Kartuschen gefüllt mit den Kunststoffkomponenten. Diese Handgeräte werden bekanntlich von den Anbietern der in den Mehrkomponentenkartuschen gehandelten Komponentenprodukte passend zu ihren Kartuschen angeboten. Diese Handgeräte fördern, üblicherweise mit einfachen Förderantriebseinrichtungen wie zum Beispiel einem pneumatischen Zylinder, die Kunststoffkomponenten schließlich in und durch eine (üblicherweise an einer Auslasseinrichtung der Kartusche befestigte) Mischkammer und ganz zuletzt aus einem Auslass der Mischkammer hinaus - wodurch der Kunststoff von Hand mittels solcher Hand-Mischvorrichtungen in kleiner Menge auf die zu reparierende Stelle aufgebracht werden kann. Derartige Kartuschen haben also üblicherweise eine Auslasseinrichtung mit Auslassöffnungen sämtlicher der Kammern der Kartuschen, um dort die bekannten statischen Mischer anzubringen: die eingangs beschriebenen Leitungselemente mit darin fest ("statisch") angeordneten Verwirbelungskonturen, durch deren "Labyrinth" hindurch die Mischpistole die Kammerinhalte zur Vermischung fördert.

Manche Kunststoffe benötigen für ihre Herstellung (Mischung aus den (mindestens) zwei Komponenten) allerdings die nur mit dynamischen Mischern erreichbare bessere Durchmischung. Herkömmliche Kartuschen-Mischvorrichtungen können dies nicht. Zur Mischung in Kartuschen-Mischvorrichtungen geeignete Reparatur-Kunststoffe müssen dann als Mischungen mit zu diesem Zweck abgewandelter Rezeptur konfiguriert werden - mit in aller Regel mindestens einer schlechteren Materialeigenschaft als der Originalkunststoff, nicht zuletzt auch mit dem Nachteil der nach der Reparatur verlorenen gegangenen Materialhomogenität am Bauteil wegen des andersartigen Reparaturwerkstoffs.

Aus der DE 10 2016 003538 A1 ist allerdings eine Mischaufsatzvorrichtung bekannt geworden zum Anbringen eines dynamischen Mischers mit Drehantrieb an eine Mehrkomponentenkartuschen-Pistole eingerichtet zum Anbringen einer Mehrkomponentenkartusche.

Der vorliegenden Erfindung liegt die Aufgabe zu Grunde, eine von einer Person nur mit Körperkraft tragbare und handhabbare Kartuschen-Mischvorrichtung oder Mischpistole (die zum Mischen von mindestens zwei flüssigen Komponenten zu einem aushärten den Kunststoff eingerichtet und an Mehrkomponentenkartuschen mehr als einer bestimmten Geometrie und insbesondere mehr als einer bestimmten Anschlussgeometrie angepasst ist und so eingerichtet ist, alle flüssigen Komponenten, die in den Behältern einer in die Pistole eingesetzten Mehrkomponentenkartusche - aus einer Auswahl von mindestens zwei geometrisch verschiedenen in die Pistole einsetzbaren Kartuschen - enthalten sind, gleichzeitig in einem bestimmten Volumenstromverhältnis aus einer Auslassöffnung des jeweiligen Behälters der Kartusche hinaus zu fördern) in ihrer Effizienz zu verbessern.

Diese Aufgabe wird von einem Mischeraufsatz-System mit den Merkmalen des Anspruchs 1 gelöst. Bevorzugte Ausgestaltungen sind in den Unteransprüchen angegeben.

Erfindungsgemäß ist ein Mischeraufsatz-System, das als Vorrichtung eingerichtet ist, sich an einer Mehrkomponentenkartuschen-Pistole, und zwar insbesondere an der Mehrkomponentenkartusche der Pistole, befestigen zu lassen. Die Pistole und/oder die Kartusche sind vorzugsweise handelsüblich (und funktionieren zusammen also auch ohne die erfindungsgemäße Vorrichtung - dann allerdings ohne die erfindungsgemäße dynamische Mischfunktion). Die Pistole ist eingerichtet, alle flüssigen Komponenten (die in den Behältern einer in die Pistole eingesetzten Mehrkomponentenkartusche enthalten sind) gleichzeitig in einem bestimmten Volumenstromverhältnis aus den Auslassöffnungen der Behälter der Kartusche hinaus zu fördern.

Das erfindungsgemäße Mischeraufsatz-System hat mindestens eine Flanscheinrichtung, einen Drehantrieb, und mindestens eine erste und eine zweite gegeneinander austauschbare Adaptereinrichtung. Es ist nämlich ausgestattet:
- mit einer Flanscheinrichtung, die eingerichtet ist, einen dynamischen Mischer (wie einleitend beschrieben) an sich (der Vorrichtung) zu befestigen und dabei flüssigkeitsdicht in Leitungsverbindung mit Komponentenzuleitungen zu bringen, die in der Vorrichtung angeordnet sind,
- mit einem Drehantrieb, der eingerichtet ist, den Mischereinsatz eines in der Flanscheinrichtung befestigten dynamischen Mischers zu seinem Antrieb Drehmoment-übertragend anzuschließen und
- einem System von Adaptereinrichtungen mit
      - mindestens einer ersten Adaptereinrichtung (8), die gegen mindestens eine zweite Adaptereinrichtung (81, 82) auswechselbar ist und die eingerichtet ist, sich an die Auslasseinrichtung (27) einer ersten Mehrkomponentenkartusche (28) mit einer ersten bestimmten Anschlussgeometrie anbringen zu lassen, und so jeden Behälter (20, 22) der ersten Mehrkomponentenkartusche (28) in Leitungsverbindung mit jeweils mindestens ener der Komponentenzuleitungen (12, 14) zu bringen, und mit
      - mindestens einer zweiten Adaptereinrichtung (81, 82), die gegen die erste Adaptereinrichtung (8) auswechselbar ist und die eingerichtet ist, sich an die gestaltabweichende Auslasseinrichtung mindestens einer zweiten Mehrkomponentenkartusche mit einer zweiten von der ersten abweichenden bestimmten Anschlussgeometrie anbringen zu lassen, und so jeden Behälter der zweiten Mehrkomponentenkartusche in Leitungsverbindung mit jeweils mindestens einer der Komponentenzuleitungen (12, 14) zu bringen, und mit
      - mindestens einer ersten Anschlussmutter (29) oder Bajonettmanschette, die gegen mindestens eine zweite Anschlussmutter und/oder Bajonettmanschette auswechselbar ist und die eingerichtet ist, sich an die Anschlusseinrichtung (27), zum Befestigen eines statischen Mischers, der ersten Mehrkomponentenkartusche (28) mit einer ersten bestimmten Anschlussgeometrie befestigen zu lassen, und mit
      - mindestens einer zweiten Anschlussmutter und/oder Bajonettmanschette, die gegen die erste Anschlussmutter (29) oder Bajonettmanschette auswechselbar ist und die eingerichtet ist, sich an die Anschlusseinrichtung zum Befestigen eines statischen Mischers, mindestens einer zweiten Mehrkomponentenkartusche mit einer von der ersten abweichenden bestimmten Anschlussgeometrie, befestigen zu lassen, und mit
      - einer Überwurfmutter (293), die eingerichtet ist, sich mit der jeweiligen Anschlussmutter (29) oder Bajonettmanschette verschrauben zu lassen und so die jeweilige Kartusche (28) an der Vorrichtung (2) mechanisch zu befestigen sowie einerseits die jeweilige Kartusche und andererseits die Anschlüsse der Komponentenzuleitungen (12, 14) der Vorrichtung (2) dichtend gegen den jeweiligen Adapter (8, 81, 82) zu ziehen.

Erfindungsgemäß ergibt sich so (zusammen mit der Pistole und dem dynamischen Mischer und der Kartusche - die alle auch Elemente des erfindungsgemäßen Systems sein können) insbesondere eine Kunststoff-Mischvorrichtung, die (insbesondere auch einschließlich der Kunststoffkomponenten-Behälter, nämlich der Kartusche) von einer Person nur mit Körperkraft tragbar und handhabbar ist, und eingerichtet ist mindestens zwei flüssige Komponenten zu einem aushärtenden Kunststoff zu mischen. Erfindungsgemäß vorteilhaft ist dabei, dass dieselbe Mischaufsatz-Vorrichtung für dynamisches Mischen - nur durch einen jeweils anderen, jeweils an die Auslasseinrichtung einer bestimmten Kartusche angepassten Adapter - sich mit beliebigen verschiedenen Kartuschen und (daran zur dosierten Entleerung angebrachten) Pistolen verwenden lässt.

Die mit der erfindungsgemäßen Vorrichtung (aus einer beliebigen Mehrkomponenten-Pistole mit aufsetzbarem statischen Mischer) herstellbare Mehrkomponenten-Handpistole mit dynamischem Mischer hat dann eine üblicherweise rohrförmige Durchleitung oder Mischkammer (des dynamischen Mischers) mit einem Auslass für den gemischten Kunststoff. Die Mischkammer steht (zuleitungsseitig) in Leitungsverbindung mit Kunststoffkomponenten-Zuleitungen (mindestens zwei - nämlich je nach Anzahl der Komponenten) sowie mit einem Förderantrieb für die Kunststoffkomponenten-Flüssigkeit (bei den handelsüblichen Pistolen vorzugsweise eine Pneumatik). Die Kunststoffkomponenten-Zuleitungen wiederum befinden sich jeweils in Leitungsverbindung mit einer Adaptereinrichtung für eine Kunststoffkomponenten-Vorratskartusche. Vorzugsweise ist die Adaptereinrichtung an einem Bauelement der Vorrichtung, das die Kunststoffkomponenten-Zuleitungen aufweist, abnehmbar befestigt (zum Beispiel mittels Schraubflansch) und durch andere Adaptereinrichtungen ersetzbar, die passende Strukturen für dieses abnehmbar befestigt sein und die Leitungsverbindung zu den Kunststoffkomponenten-Zuleitungen aufweisen. Kartuschenseitig sind die Adaptereinrichtungen jeweils an die Anschlusseinrichtung der Kartusche, die die Auslassöffnungen sämtlicher der Behälter der Mehrkomponentenkartusche enthält angepasst. Und jeder Adapter ist so gestaltet, dass er eingerichtet ist, jeden Behälter der zu ihm passenden Mehrkomponentenkartusche in Leitungsverbindung mit jeweils mindestens einer der Komponentenzuleitungen zu bringen. So lasst sich die erfindungsgemäße Vorrichtung auch dann weiterhin verwenden, wenn zum Beispiel eine neu gestaltete Mehrkomponentenkartusche auf den Markt kommt: es braucht nur ein Adapter hergestellt zu werden, der wie beschrieben an die Anschlusseinrichtung der Kartusche angepasst ist.

Der Förderantrieb der also herstellbaren dynamischen Mischpistole kann also pneumatischer ein Kolbenstößelantrieb sein, der die Kunststoffkomponenten-Vorratskartuschen unter Druck setzt, indem dessen Kolbenstößel gegen die als Kolben verschieblichen Böden der Behälter der Kartusche drücken und so die flüssigen Kunststoffkomponenten gleichzeitig aus der Kartusche hinaus fördern (dies ergibt bei identischem Vorschub auf die Behälterböden ein Verhältnis der Volumenströme aus den Behälterauslässen, das gleich dem Verhältnis der Querschnittsflächen der Behälter ist). Aber zum Beispiel auch eine Förderpumpe je Kunststoffkomponente ist möglich.

Die rohrförmige Mischkammer (nämlich der dynamische Mischer) ist ein Austauschteil - insbesondere auch ein Einwegartikel, also so konstruiert und kalkuliert, dass es sich zum Beispiel schon nach einmaligem Gebrauch entsorgen und ersetzen lässt. Insbesondere unter diesem Aspekt ist es auch erfindungsgemäß, dass die erfindungsgemäße Mischvorrichtung die Mischkammer nicht unmittelbar aufweist, sondern nur eingerichtet ist, eine solche in einer für sie eingerichteten Flanscheinrichtung aufzunehmen.

Erfindungsgemäß weist die Vorrichtung einen Drehantrieb auf. Außerdem ist die zur Verwendung vorgesehene Mischkammer eingerichtet, einen Mischereinsatz mit mindestens einem Verwirbelungselement drehbar in sich aufzuweisen (dynamischer Mischer). Und der Drehantrieb ist angepasst, den Mischereinsatz eines eingesetzten dynamischen Mischers an seinen Antrieb Drehmoment-übertragend anzuschließen.

So wird mittels der Erfindung eine Kartuschen-Mischvorrichtung, die von einer Person nur mit Körperkraft tragbar und handhabbar ist, und die sich für das Mischen kleinerer Mengen stets bereithalten lässt, zu dynamischer Mischung eingerichtet. Reparaturen auch von original nur dynamisch mischbaren Kunststoffen werden auch von Hand und vor Ort durch die Erfindung mit dem Originalkunststoff in der Originalrezeptur - also homogen - möglich. Gegenüber bisher in den Hand-Pistolen durchgeführten Mischungen ist der Grad der Durchmischung erheblich verbessert und gleichzeitig erfolgt dies mit deutlich verringertem Druckverlust in der Mischkammer, so dass der Ausstoß oder Austrag bei gleichem Materialtransport-Energieaufwand wesentlich verbessert ist. Vorzugsweise ist der Drehantrieb ein Pneumatikmotor und/oder der Förderantrieb (wie schon gesagt) pneumatisch. Wenn beide pneumatisch sind, ist es bevorzugt, den Drehantrieb des dynamischen Mischers und den Förderantrieb der Flüssigkeitskomponenten aus derselben Druckluftquelle zu versorgen. Der Drehantrieb kann aber auch zum Beispiel ein Elektromotor sein und/oder der Förderantrieb einer Pumpe, zum Beispiel einer Dosier-, Zahnrad- oder Rollerpumpe.

Der dynamische Mischer, zu dessen Aufnahme die Flanscheinrichtung eingerichtet ist, weist eine Mischkammer auf wie gesagt vorzugsweise in Gestalt eines geradzylindrischen Rohrs als Durchleitung mit einerseits einem Auslassende zum Auslassen von gemischtem Kunststoff und andererseits mit einem Flanschende. Die Flanscheinrichtung ist dann so eingerichtet, dass das Flanschende an der Flanscheinrichtung flüssigkeitsdicht anbringbar ist und dabei das geradzylindrische Mischkammer-Rohr mit einer Abtriebswelle des Drehantriebs geometrisch axial fluchtet. Die Abtriebswelle ist dann eingerichtet, den im Rohr drehbaren Mischereinsatz des dynamischen Mischers zu seinem Antrieb Drehmoment-übertragend anzuschließen. Dies erfolgt vorzugsweise durch einen Haken am Ende der Abtriebswelle, wobei der im Rohr drehbare Mischereinsatz eine Öse (insbesondere in einem Ende des Trägerstabelements des Mischereinsatzes) aufweist, in die der Haken passt. Alternative Ankopplungen sind erfindungsgemäß möglich wie zum Beispiel ein "selbstschneidender Mischeranschluss" (wo sich ein Gewinde am Ende der Abtriebswelle in eine Sacklockbohrung am Antriebsende des Mischereinsatzes (aus Kunststoff) selbstschneidend eindrehen lässt, weil Abtriebswelle, Gewinde, Sacklockbohrung und Mischereinsatz bestimmungsgemäß positioniert allesamt axial zueinander fluchten - siehe z.B. DE 10 2012 004 056.3), oder Klipps, also federnde, formschlüssige Verbindungselemente.

Diese und weitere Vorteile und Merkmale der Erfindung werden anhand der folgenden Abbildungen eines Ausführungsbeispiels der Erfindung weiter beschrieben. Darin zeigen
- Fig. 1: eine entlang A-A geschnittene Seitenansicht einer erfindungsgemäßen Mischvorrichtung mit einer Kunststoff-Mehrkomponentenkartusche,
- Fig. 2: die geschnittene Seitenansicht der erfindungsgemäßen Mischvorrichtung ohne die Kartusche,

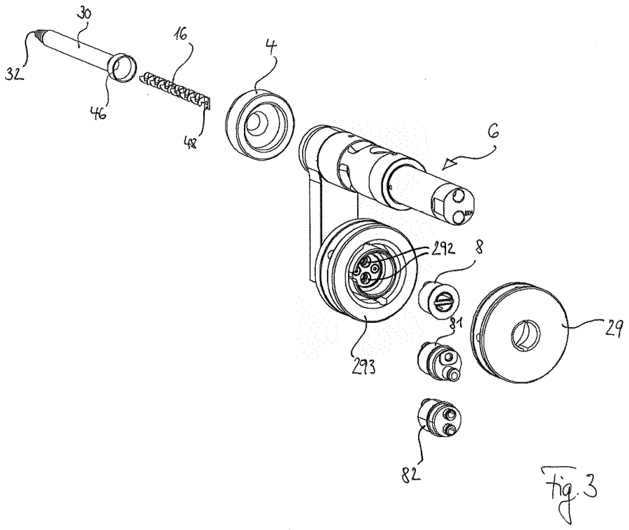

- Fig. 3: eine räumliche, explodierte Ansicht der erfindungsgemäßen Mischvorrichtung ohne die Kartusche und

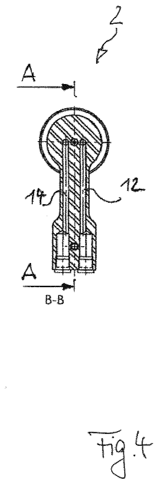

- Fig. 4: eine entlang B-B geschnittene Vorderansicht der Mischvorrichtung nach Fig. 1.

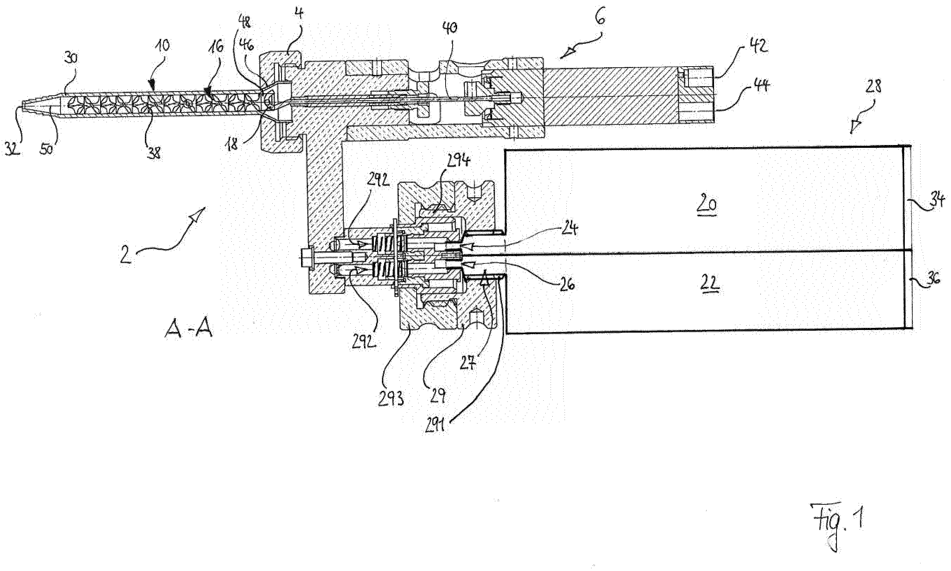

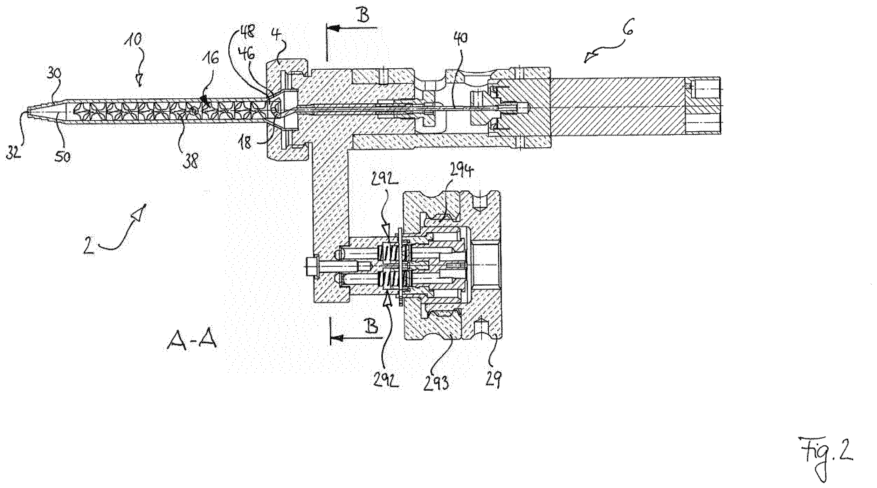

Fig. 1 und 2 zeigen eine Mischeraufsatz-Vorrichtung 2. Sie hat eine Flanscheinrichtung 4, einen Drehantrieb 6, und einen Adapter 8. Sie ist nämlich ausgestattet:
- mit einer Flanscheinrichtung 4, die eingerichtet ist, einen dynamischen Mischer 10 (wie einleitend beschrieben) an sich (der Vorrichtung 2) zu befestigen und dabei flüssigkeitsdicht in Leitungsverbindung mit Komponentenzuleitungen 12, 14 der Vorrichtung 2 zu bringen,
- mit einem Drehantrieb 6, der eingerichtet ist, den Mischereinsatz 16 eines in der Flanscheinrichtung 4 befestigten dynamischen Mischers 10 zu seinem Antrieb Drehmoment-übertragend mittels eines Hakens 18 anzuschließen und
- mit einem Adapter 8, der eingerichtet ist, jeden Behälter 20 einer Mehrkomponentenkartusche 28 in Leitungsverbindung mit jeweils mindestens einer der Komponentenzuleitungen 12, 14 zu bringen - und zwar jeden Behälter 20, 22 durch insbesondere jede seiner Auslassöffnungen 24, 26; die in einer gemeinsamen Anschlusseinrichtung 27 angeordnet sind (an die üblicherweise direkt ein statischer Mischer anzubringen vorgesehen ist, um so die Komponenten in den mittels der Pistole (nicht dargestellt) dosiert und immer im selben Mischungsverhältnis entleerbaren Kartuschenbehälter 20, 22 üblicherweise durch den statischen Mischer hindurch vermischt auszubringen).

Erfindungsgemäß ergibt sich so (zusammen mit der Pistole (nicht dargestellt) und dem dynamischen Mischer 10 und der Kartusche 28) eine Kunststoff-Mischvorrichtung, die (insbesondere auch einschließlich der Kunststoffkomponenten-Behälter 20, 22, nämlich der Kartusche 28) von einer Person (nicht dargestellt) nur mit Körperkraft tragbar und handhabbar ist, und eingerichtet ist mindestens zwei flüssige Komponenten zu einem aushärtenden Kunststoff dynamisch zu mischen.

Die Kunststoff-Mischvorrichtung hat eine rohrförmige Durchleitung 30 oder Mischkammer 30 (des dynamischen Mischers 10) in Leitungsverbindung mit einem Auslass 32 für den gemischten Kunststoff. Die Mischkammer steht in Leitungsverbindung mit den zwei Kunststoffkomponenten-Zuleitungen 12, 14. Und die Kunststoff-Mischvorrichtung hat einen Förderantrieb (nicht dargestellt) für die Kunststoffkomponenten-Flüssigkeit in der handelsüblichen Pistole (nicht dargestellt), nämlich vorzugsweise eine Pneumatik). Die Kunststoffkomponenten-Zuleitungen 12, 14 wiederum befinden sich jeweils in Leitungsverbindung mit dem Adapter 8 für diese Kunststoffkomponenten-Vorratskartusche 28 (Dieser Adapter für diese Kunststoffkomponenten-Vorratskartusche 28 ist gegen einen anderen Adapter 8' für eine gestaltabweichende Kunststoffkomponenten-Vorratskartusche (nicht dargestellt) mit mindestens gestaltabweichender Anschlusseinrichtung 27 austauschbar, um so die Vorrichtung 2 erfindungsgemäß an verschiedenen Kartuschen 28 (und deren Mischpistolen) verwenden zu können - dazu sogleich). Der Förderantrieb (nicht dargestellt) kann also ein pneumatischer Kolbenstößelantrieb sein, der die Kunststoffkomponenten-Vorratskartuschen unter Druck setzt, indem dessen Kolbenstößel gegen die als Kolben verschieblichen Böden 34, 36 der Behälter 20, 22 der Kartusche 28 drücken und so die flüssigen Kunststoffkomponenten gleichzeitig aus der Kartusche hinaus fördern (dies ergibt bei identischem Vorschub auf die Behälterböden ein Verhältnis der Volumenströme aus den Behälterauslässen, das gleich dem Verhältnis der Querschnittsflächen der Behälter 20, 22 ist).

Die rohrförmige Mischkammer (nämlich der dynamische Mischer 10) ist ein Austauschteil - insbesondere auch ein Einwegartikel, also so konstruiert und kalkuliert, dass es sich zum Beispiel schon nach einmaligem Gebrauch entsorgen und ersetzen lässt. Insbesondere unter diesem Aspekt ist es auch erfindungsgemäß, dass die erfindungsgemäße Mischeraufsatz-Vorrichtung 2 die Mischkammer 10, 30, 16 nicht unmittelbar aufweist, sondern nur eingerichtet ist, eine solche in einer für sie eingerichteten Flanscheinrichtung 4 aufzunehmen.

Die Vorrichtung 2 weist einen Drehantrieb 6 auf. Außerdem ist der zur Verwendung vorgesehene dynamische Mischer 10 eingerichtet, einen Mischereinsatz 16 mit mindestens einer Vielzahl propellerartiger Verwirbelungselemente 38 drehbar in sich aufzuweisen (dynamischer Mischer). Und der Drehantrieb 6 ist angepasst, den Mischereinsatz 16 eines eingesetzten dynamischen Mischers 10 an seiner Abtriebswelle 40 durch den Haken 18 Drehmoment-übertragend anzuschließen.

So wird mittels der Erfindung eine Kartuschen-Mischvorrichtung, die von einer Person nur mit Körperkraft tragbar und handhabbar ist, und die sich für das Mischen kleinerer Mengen stets bereithalten lässt, zu dynamischer Mischung eingerichtet. Reparaturen auch von original nur dynamisch mischbaren Kunststoffen werden auch von Hand und vor Ort durch die Erfindung mit dem Originalkunststoff in der Originalrezeptur - also homogen - möglich. Gegenüber Mischungen mit statischem Mischer ist der Grad der Durchmischung erheblich verbessert, und gleichzeitig erfolgt dies mit deutlich verringertem Druckverlust in der Mischkammer, so dass der Ausstoß oder Austrag bei gleichem Materialtransport-Energieaufwand wesentlich verbessert ist. Erfindungsgemäß vorteilhaft können nun preiswerte Hand-Pistolen, die zum Beispiel vom jeweiligen Kartuschenanbieter in ihrem relativ einfachen Aufbau relativ preiswert bereitgehalten werden und zur Verfügung stehen, durch die erfindungsgemäß jeweils adaptierbare Vorrichtung 2 zu dynamischer Mischung erheblich aufgewertet werden - und zwar mit nur einer Vorrichtung 2 verschiedene Hand-Pistolen für verschiedene Kartuschen:
Der Adapter 8 für die abgebildete Kunststoffkomponenten-Vorratskartusche 28 nämlich ist gegen einen anderen Adapter 81 für eine gestaltabweichende Kunststoffkomponenten-Vorratskartusche (nicht dargestellt) mit mindestens gestaltabweichender Anschlusseinrichtung austauschbar.

Zum Anschluss irgendeiner Kunststoffkomponenten-Vorratskartusche (zum Beispiel 28) an der Vorrichtung 2 zum dynamischen Mischen wird zunächst an deren Anschlusseinrichtung (zum Beispiel 27 der Kartusche 28) eine jeweils auf diese Kartusche angepasste Anschlussmutter (zum Beispiel 29) befestigt, nämlich an deren jeweiligem Anschlussmittel (hier einem Gewinde 291 - alternativ gibt es an anderen Kartuschen zum Beispiel Bajonettanschlüsse; nicht dargestellt), das vom Hersteller bestimmungsgemäß zum Befestigen eines statischen Mischers (nicht dargestellt) an der Kartusche (zum Beispiel 28) vorgesehen wurde. Dann wird der zur Kartusche (zum Beispiel 28) passende Adapter (8 für die Kartusche 28) aus Kautschuk in die Anschlusseinrichtung (zum Beispiel 27) der Kartusche (zum Beispiel 28) gesteckt. Andererseits in Richtung der Vorrichtung 2 passt dieser Adapter (zum Beispiel 8) in die Anschlüsse 292 der Komponentenzuleitungen 12, 14 - und ist dort an der Vorrichtung 2 mittels einer Überwurfmutter 293, die sich mit der Anschlussmutter (zum Beispiel 29) verschrauben lässt, befestigt. Überwurfmutter 293 und Anschlussmutter (zum Beispiel 29) bilden also zum einen die mechanische Befestigung der Kartusche (zum Beispiel 28 an der Vorrichtung 2 - und ziehen zum anderen einerseits die Kartusche und andererseits die Anschlüsse 292 der Komponentenzuleitungen 12, 14 an der Vorrichtung 2 dichtend gegen den Kautschukadapter (zum Beispiel 8) zur fluidkomponentendichten Leitungsverbindung zwischen den Kammern (zum Beispiel 20, 22) der Kartusche (zum Beispiel 28) und dem dynamischen Mischer 16, 30 an der Vorrichtung 2.

Austauschadapter 81, 82 für andere Kartuschen (nicht dargestellt) sind also in Richtung der Vorrichtung 2 von einheitlicher Gestalt und passen so in die Anschlüsse 292 der Komponentenzuleitungen 12, 14. Andererseits sind sie an die jeweils gestaltabweichenden Anschlusseinrichtungen (zum Beispiel 27) verschiedener Kartuschen (zum Beispiel 28) jeweils angepasst. Entsprechend verhält es sich mit den Anschlussmuttern (zum Beispiel 29): Anschlussmuttern für eine jeweilige Kartusche (zum Beispiel 28) sind in Richtung der Vorrichtung 2 und dort der Überwurfmutter 293 von einheitlicher Gestalt, haben nämlich eine Außengewindehülse 294 und passen so auf das Innengewinde der Überwurfmutter 293. Andererseits sind die Anschlussmuttern (zum Beispiel 29) an die jeweils gestaltabweichenden Anschlusseinrichtungen (zum Beispiel 27) verschiedener Kartuschen (zum Beispiel 28) jeweils angepasst (und dort an die Anschlussmittel, hier das Gewinde 291, das vom Hersteller bestimmungsgemäß zum Befestigen eines statischen Mischers (nicht dargestellt) an der Kartusche (zum Beispiel 28) vorgesehen wurde. Zum Anschließen einer neuen, erneut gestaltabweichenden Kartusche (nicht dargestellt) an die Vorrichtung 2 müssten also nur ein wie eben beschrieben passender Adapter und eine wie eben beschrieben passende Anschlussmutter bereitgestellt werden.

Der Anschluss der zur jeweiligen Kartusche passenden und gehörenden Förderpistole erfolgt funktional zumeist allein an den Böden der Behälter oder Kammern der jeweiligen Kartusche (dazu sogleich), so dass die Vorrichtung 2 nicht auch an die verschiedenen Pistolen der jeweiligen Kartusche angepasst werden muss.

Der Drehantrieb 6 ist ein Pneumatikmotor 6 und der Förderantrieb (wie schon gesagt) vorzugsweise pneumatisch. Wenn beide pneumatisch sind, kann der Drehantrieb des dynamischen Mischers und der Förderantrieb der Flüssigkeitskomponenten aus derselben Druckluftquelle versorgt werden, die sich an geeigneten Anschlüssen anschließen lässt.

Der dynamische Mischer 10, zu dessen Aufnahme die Flanscheinrichtung 4 eingerichtet ist, weist eine Mischkammer 30 auf wie gesagt in Gestalt eines geradzylindrischen Rohrs als Durchleitung mit einerseits einem Auslassende 32 zum Auslassen von gemischtem Kunststoff und andererseits mit einem Flanschende 46. Die Flanscheinrichtung 4 ist dann so eingerichtet, dass das Flanschende 46 an der Flanscheinrichtung 4 flüssigkeitsdicht anbringbar ist und dabei das geradzylindrische Mischkammer-Rohr 30 mit der Abtriebswelle 40 des Drehantriebs 6 geometrisch axial fluchtet. Die Abtriebswelle 40 ist wie gesagt eingerichtet, den im Rohr 30 drehbaren Mischereinsatz 16 des dynamischen Mischers zu seinem Antrieb Drehmoment-übertragend anzuschließen, nämlich durch den Haken 18 am Ende der Abtriebswelle 40, wobei der im Rohr drehbare Mischereinsatz 16 eine Öse 48 (in einem Ende des Trägerstabelements (der Mittelachse 50 der Verwirbelungselemente 38) des Mischereinsatzes 16) aufweist, in die der Haken passt.

### Bezugszeichenliste

Mischeraufsatz-Vorrichtung 2
Flanscheinrichtung 4
Drehantrieb 6
Adapter 8, 81, 82
Dynamischer Mischer 10
Komponentenzuleitungen 12, 14
Mischereinsatz 16
Haken 18
Behälter 20, 22 einer Mehrkomponentenkartusche 28
Auslassöffnungen 24, 26 der Behälter 20, 22
Gemeinsame Anschlusseinrichtung 27 der Auslassöffnungen 24, 26
Mehrkomponentenkartusche 28
Anschlussmutter 29
Anschlussmittel; Gewinde 291
Anschlüsse 292 der Komponentenzuleitungen 12, 14
Überwurfmutter 293
Außengewindehülse 294 der Anschlussmutter 29
Rohrförmige Durchleitung; Mischkammer 30 des dynamischen Mischers 10
Auslass 32 für den gemischten Kunststoff.
Verschiebliche Böden 34, 36 der Behälter 20, 22 der Kartusche 28
Verwirbelungselemente 38
Abtriebswelle 40 des Drehantriebs 6
Druckluft-Anschlüsse 42, 44
Flanschende 46 der Mischkammer 30
Öse 48 des Mischereinsatzes 16
Mittelachse 50 der Verwirbelungselemente 38

## Patentansprüche

1. Mischeraufsatz-System mit einer Mischeraufsatz-Vorrichtung (2)
- eingerichtet zum Befestigen an einer Auslasseinrichtung (27) einer Mehrkomponentenkartusche (28), an die eine Mehrkomponentenkartuschen-Pistole angepasst ist und somit eingerichtet ist, alle flüssigen Komponenten, die in den mindestens zwei Behältern (20, 22) der in die Pistole einsetzbaren und eingesetzten Mehrkomponentenkartusche (28) enthalten sind, gleichzeitig in einem bestimmten Volumenstromverhältnis aus den Auslassöffnungen (24, 26) der Behälter (20, 22) der Kartusche hinaus zu fördern, und
- mit einer Flanscheinrichtung (4), die eingerichtet ist, einen dynamischen Mischer (16, 30) an der Vorrichtung zu befestigen und dabei flüssigkeitsdicht in Leitungsverbindung mit Komponentenzuleitungen (12, 14) zu bringen, die in der Vorrichtung angeordnet sind, und
- mit einem Drehantrieb (6), der eingerichtet ist, den Mischereinsatz (16) eines in der Flanscheinrichtung (4) befestigten dynamischen Mischers zu seinem Antrieb Drehmoment-übertragend anzuschließen,
**gekennzeichnet durch**
- ein System von Adaptereinrichtungen mit
- mindestens einer ersten Adaptereinrichtung (8), die gegen mindestens eine zweite Adaptereinrichtung (81,82) auswechselbar ist und die eingerichtet ist, sich an die Auslasseinrichtung (27) einer ersten Mehrkomponentenkartusche (28) mit einer ersten bestimmten Anschlussgeometrie anbringen zu lassen, und so jeden Behälter (20, 22) der ersten Mehrkomponentenkartusche (28) in Leitungsverbindung mit jeweils mindestens einer der Komponentenzuleitungen (12, 14) zu bringen, **und mit**
- mindestens einer zweiten Adaptereinrichtung (81, 82), die gegen die erste Adaptereinrichtung (8) auswechselbar ist und die eingerichtet ist, sich an die gestaltabweichende Auslasseinrichtung mindestens einer zweiten Mehrkomponentenkartusche mit einer von der ersten abweichenden bestimmten Anschlussgeometrie anbringen zu lassen, und so jeden Behälter der zweiten Mehrkomponentenkartusche in Leitungsverbindung mit jeweils mindestens einer der Komponentenzuleitungen (12, 14) zu bringen, und mit
- mindestens einer ersten Anschlussmutter (29) oder Bajonettmanschette, die gegen mindestens eine zweite Anschlussmutter und/oder Bajonettmanschette auswechselbar ist und die eingerichtet ist, sich an die Anschlusseinrichtung (27), zum Befestigen eines statischen Mischers, der ersten Mehrkomponentenkartusche (28) mit einer ersten bestimmten Anschlussgeometrie befestigen zu lassen, **und mit**
- mindestens einer zweiten Anschlussmutter und/oder Bajonettmanschette, die gegen die erste Anschlussmutter (29) oder Bajonettmanschette auswechselbar ist und die eingerichtet ist, sich an die Anschlusseinrichtung zum Befestigen eines statischen Mischers, mindestens einer zweiten Mehrkomponentenkartusche mit einer von der ersten abweichenden bestimmten Anschlussgeometrie, befestigen zu lassen, **und mit**
- einer Überwurfmutter (293), die eingerichtet ist, sich mit der jeweiligen Anschlussmutter (29) oder Bajonettmanschette verschrauben zu lassen und so die jeweilige Kartusche (28) an der Vorrichtung (2) mechanisch zu befestigen sowie einerseits die jeweilige Kartusche und andererseits die Anschlüsse 292 der Komponentenzuleitungen (12, 14) der Vorrichtung (2) dichtend gegen den jeweiligen Adapter (8, 81, 82) zu ziehen.

2. Vorrichtung nach dem vorhergehenden Anspruch, **dadurch gekennzeichnet, dass** der Drehantrieb (6) ein Pneumatikmotor ist.

3. Vorrichtung nach dem vorhergehenden Anspruch, **dadurch gekennzeichnet, dass** sie eingerichtet ist zum Befestigen an einer pneumatisch angetriebenen Pistole und dass der Pneumatikmotor zur Versorgung durch dieselbe Druckluftquelle wie die Pistole eingerichtet ist.

4. Vorrichtung nach einem der vorhergehenden Ansprüche, **dadurch gekennzeichnet, dass** der dynamische Mischer, zu dessen Aufnahme die Flanscheinrichtung (4) eingerichtet ist, eine Mischkammer (30) aufweist in Gestalt eines geradzylindrischen Rohrs als Durchleitung, mit einem Auslassende zum Auslassen von gemischtem Kunststoff und mit einem Flanschende (46), und dass die Flanscheinrichtung (4) so eingerichtet ist, dass das Flanschende (46) an der Flanscheinrichtung (4) flüssigkeitsdicht anbringbar ist und dabei das geradzylindrische Rohr mit einer Abtriebswelle (40) des Drehantriebs (6) geometrisch axial fluchtet, und dass die Abtriebswelle (40) eingerichtet ist, einen im Rohr drehbaren Mischereinsatz (16) des dynamischen Mischers zu seinem Antrieb Drehmoment-übertragend anzuschließen.

5. Vorrichtung nach dem vorhergehenden Anspruch, **dadurch gekennzeichnet, dass** die Abtriebswelle (40) durch einen Haken an ihrem Ende eingerichtet ist, einen im Rohr drehbaren Mischereinsatz (16) mit einer Öse (48), in die der Haken passt, des dynamischen Mischers zu seinem Antrieb Drehmoment-übertragend anzuschließen.

## Claims

1. Mixer attachment system, with a mixer attachment device (2)
- configured to be attached to an outlet element (27) of a multi-component cartridge (28), to which a multi-component cartridge gun is adapted and which is thus configured to convey all liquid components, which are contained in the at least two containers (20, 22) of the multi-component cartridge (28) insertable and inserted into the gun, out of the outlet openings (24, 26) of the containers (20, 22) of the cartridge simultaneously at a defined volume flow ratio, and
- with a flange element (4) which is configured to attach a dynamic mixer (16, 30) to the device and thereby bring it into liquid-tight connection with component supply lines (12, 14) arranged in the device, and
- with a rotary drive (6) which is configured to connect the mixer insert (16) of a dynamic mixer fixed in the flange element (4) in a torque-transmitting manner for connection thereof,
**characterized by**
- a system of adapter devices with
- at least one first adapter device (8) which can be replaced by at least one second adapter device (81, 82) and which is configured to be attached to the outlet element (27) of a first multi-component cartridge (28) with a defined first connection geometry, and to thereby bring each container (20, 22) of the first multi-component cartridge (28) into connection with in each case at least one of the component supply lines (12, 14), **and with**
- at least one second adapter device (81, 82) which can be replaced by the first adapter device (8) and which is configured to be attached to the divergent outlet element of at least one second multi-component cartridge with a defined connection geometry different from the first connection geometry, and to thereby bring each container of the second multi-component cartridge into connection with in each case at least one of the component supply lines (12, 14), and with
- at least one first connecting nut (29) or bayonet socket, which can be replaced by at least one second connecting nut and/or bayonet socket and is configured to be attached to the connecting device (27) of the first multi-component cartridge (28) with a defined first connecting geometry, for attachment of a static mixer, **and with**
- at least one second connection nut and/or bayonet sleeve, which can be replaced by the first connection nut (29) and/or bayonet sleeve and is configured to be attached to the connection device of at least one second multi-component cartridge with a defined connection geometry different from the first connection geometry, for attachment of a static mixer, **and with**
- a coupling nut (293) which is configured to be screwed to the respective connecting nut (29) or bayonet socket and to thereby mechanically secure the respective cartridge (28) to the device (2) as well as pull, on the one hand, the respective cartridge and, on the other hand, the connections (292) of the component supply lines (12, 14) of the device (2) in a sealing manner against the respective adapter (8, 81, 82).

2. Device according to the preceding claim, **characterized in that** the rotary drive (6) is a pneumatic motor.

3. Device according to the preceding claim, **characterized in that** the device is configured to be attached to a pneumatically driven gun, and that the pneumatic motor is configured to be supplied by the same source of compressed air as the gun.

4. Device according to any one of the preceding claims, **characterized in that** the dynamic mixer, for the reception of which the flange element (4) is configured, comprises a mixing chamber (30) in the form of a straight cylindrical tube as a passage, with an outlet end for discharging mixed plastic and with a flange end (46), and that the flange element (4) is configured in such a way that the flange end (46) can be attached in a liquid-tight manner to the flange element (4) and the straight cylindrical tube is geometrically axially aligned with an output shaft (40) of the rotary drive (6), and that the output shaft (40) is configured to connect a mixer insert (16), which is rotatable in the tube, of the dynamic mixer, in a torque-transmitting manner for the connection thereof.

5. Device according to the preceding claim, **characterized in that** the output shaft (40) is configured, by means of a hook on its end, to connect a mixer insert (16), which is rotatable in the tube, with an eye (48), into which the hook fits, of the dynamic mixer in a torque-transmitting manner for the connection thereof.

## Revendications

1. Système à accessoire mélangeur avec un dispositif à accessoire mélangeur (2)
- mis au point pour être fixé sur un équipement de sortie (27) d'une cartouche à composants multiples (28), à laquelle un pistolet à cartouches à composants multiples est adapté et qui ainsi est mis au point pour refouler tous les composants liquides, qui sont contenus dans les au moins deux contenants (20, 22) de la cartouche à composants multiples (28) pouvant être insérée et insérée dans le pistolet, hors des orifices de sortie (24, 26) des contenants (20, 22) de la cartouche de manière simultanée selon un rapport de débit défini, et
- avec un système de bride (4), qui est mis au point pour fixer un mélangeur dynamique (16, 30) sur le dispositif et le faire venir ce faisant en raccord étanche aux liquides avec les conduits d'arrivée de composants (12, 14), qui sont disposés dans le dispositif, et
- avec un entraînement rotatif (6), qui est mis au point pour raccorder avec un transfert de couple de rotation l'insert mélangeur (16) d'un mélangeur dynamique fixé dans l'équipement de bride (4) pour son entraînement,
**caractérisé par**
- un système d'équipements adaptateurs avec
- au moins un premier équipement adaptateur (8), qui peut être remplacé par au moins un deuxième équipement adaptateur (81, 82) et qui est mis au point pour être installé sur l'équipement de sortie (27) d'une première cartouche à composants multiples (28) avec une première géométrie de raccordement définie, et pour faire venir ainsi en raccord chaque contenant (20, 22) de la première cartouche à composants multiples (28) avec respectivement au moins un des conduits d'arrivée de composants (12, 14), **et avec**
- au moins un deuxième équipement adaptateur (81, 82), qui peut être remplacé par le premier équipement adaptateur (8) et qui est mis au point pour être installé sur l'équipement de sortie présentant une forme divergente d'au moins une deuxième cartouche à composants multiples avec une géométrie de raccordement définie divergeant de la première et pour ainsi amener chaque contenant de la deuxième cartouche à composants multiples en raccord avec respectivement au moins un des conduits d'arrivée de composants (12, 14), et avec
- au moins un premier écrou de raccordement (29) ou un manchon à baïonnette, qui peut être remplacé par au moins un deuxième écrou de raccordement et/ou un deuxième manchon à baïonnette et qui est mis au point pour être fixé sur l'équipement de raccordement (27), pour fixer un mélangeur statique, de la première cartouche à composants multiples (28) avec une première géométrie de raccordement définie, **et avec**
- au moins un deuxième écrou de raccordement et/ou un manchon à baïonnette, qui peut être remplacé par le premier écrou de raccordement (29) et/ou le manchon à baïonnette et qui est mis au point pour être fixé sur l'équipement de raccordement, pour fixer un mélangeur statique, d'au moins une deuxième cartouche à composants multiples avec une géométrie de raccordement définie divergeant de la première, **et avec**
- un écrou d'accouplement (293), qui est mis au point pour être vissé à l'écrou de raccordement (29) respectif ou au manchon à baïonnette et pour fixer ainsi de manière mécanique la cartouche (28) respective sur le dispositif (2) et tirer ainsi de manière étanche d'une part la cartouche respective et d'autre part les raccords (292) des conduits d'arrivée de composants (12, 14) du dispositif (2) contre l'adaptateur (8, 81, 82) respectif.

2. Dispositif selon la revendication précédente, **caractérisé en ce que** l'entraînement rotatif (6) est un moteur pneumatique.

3. Dispositif selon la revendication précédente, **caractérisé en ce qu'**il est mis au point pour être fixé sr un pistolet entraîné de manière pneumatique, et que le moteur pneumatique est mis au point pour être alimenté par la même source d'air comprimé que le pistolet.

4. Dispositif selon l'une quelconque des revendications précédentes, **caractérisé en ce que** le mélangeur dynamique, pour le logement duquel l'équipement de bride (4) est mis au point, présente une chambre de mélange (30) sous la forme d'un tube cylindrique droit en tant que passage, avec une extrémité de sortie pour faire sortir de la matière synthétique mélangée et avec une extrémité de bride (46), et que l'équipement de bride (4) est mis au point de telle sorte que l'extrémité de bride (46) peut être installée de manière étanche aux liquides sur l'équipement de bride (4) et le tube cylindrique droit est ce faisant aligné de manière géométriquement axiale avec un arbre de sortie (40) de l'entraînement rotatif (6), et que l'arbre de sortie (40) est mis au point pour raccorder avec un transfert de couple de rotation un insert mélangeur (16) pouvant tourner dans le tube du mélangeur dynamique pour son entraînement.

5. Dispositif selon la revendication précédente, **caractérisé en ce que** l'arbre de sortie (40) est mis au point grâce à un crochet sur son extrémité pour raccorder avec un transfert de couple de rotation un insert mélangeur (16) pouvant tourner dans le tube avec un œillet (48), que le crochet traverse, du mélangeur dynamique pour son entraînement.
